(19) Europäisches Patentamt
European Patent Office
Office européen des brevets

(11) **EP 3 996 959 B1**

(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **20725463.2**

(22) Anmeldetag: **07.05.2020**

(51) Internationale Patentklassifikation (IPC):
***B60T 8/1761*** (2006.01)

(52) Gemeinsame Patentklassifikation (CPC):
**B60T 8/17616**

(86) Internationale Anmeldenummer:
**PCT/EP2020/062664**

(87) Internationale Veröffentlichungsnummer:
**WO 2021/008750 (21.01.2021 Gazette 2021/03)**

(54) **VERFAHREN ZUM BETREIBEN EINES ANTI-BLOCKIER-SYSTEMS EINES FAHRZEUGS UND ENTSPRECHENDES ANTI-BLOCKIER-SYSTEM**

METHOD FOR OPERATING AN ANTI-LOCK BRAKING SYSTEM ON A VEHICLE AND CORRESPONDING ANTI-LOCK BRAKING SYSTEM

PROCÉDÉ DE FONCTIONNEMENT D'UN SYSTÈME ANTI-BLOCAGE D'UN VÉHICULE ET SYSTÈME ANTI-BLOCAGE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2019   DE 102019210330**

(43) Veröffentlichungstag der Anmeldung:
**18.05.2022   Patentblatt 2022/20**

(73) Patentinhaber: **Robert Bosch GmbH**
**70442 Stuttgart (DE)**

(72) Erfinder:
• **KLUG, Andreas**
  **74199 Untergruppenbach (DE)**
• **EISELE, Achim**
  **74394 Hessigheim (DE)**
• **WEINGART, Philipp**
  **74080 Heilbronn (DE)**
• **KRANICH, Matthias**
  **71723 Grossbottwar (DE)**
• **BECKER, Jan**
  **71522 Backnang (DE)**

(56) Entgegenhaltungen:
EP-A1- 0 177 817     EP-A1- 0 658 462
EP-A2- 0 291 978     EP-A2- 0 572 808

**Beschreibung**

Gebiet der Erfindung

Die Erfindung betrifft ein Verfahren zum Betreiben eines Anti-Blockier-Systems eines Fahrzeugs und ein entsprechendes Anti-Blockier-System.

Stand der Technik

Bei einem Bremsvorgang mit Anti-Blockier-System wird ein andauerndes Blockieren der Räder eines Fahrzeugs bei verringerter Haftung verhindert, indem an Rädern des Fahrzeugs ein Bremsmoment zyklisch erhöht und wieder gesenkt wird. Dabei wird das Bremsmoment pro Rad jeweils auf ein fahrzeugspezifisch vordefiniertes beziehungsweise appliziertes Bremsmoment gesenkt, nachdem das Rad zu blockieren beginnt. Dieses festgelegte Bremsmoment ist so niedrig, dass das Rad in allen erdenklichen Situationen wieder zu rotieren beginnt. Von diesem festgelegten Wert wird das Bremsmoment wieder erhöht, bis das Rad wieder zu blockieren beginnt. Zwischen dem Absenken und erneuten Erhöhen kann das Bremsmoment für eine Haltedauer auf dem vordefinierten Bremsmoment konstant gehalten werden, um dem Rad Zeit zum Stabilisieren zu geben.

Die EP 0 291 978 A2 beschreibt eine herkömmliche Antirutschvorrichtung.

Offenbarung der Erfindung

Vor diesem Hintergrund werden mit dem hier vorgestellten Ansatz ein Verfahren zum Betreiben eines Fahrzeugs, ein entsprechendes Anti-Blockier-System sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

Vorteile der Erfindung

Ausführungsformen der vorliegenden Erfindung können in vorteilhafter Weise ermöglichen, ein zu starkes Absenken des Bremsmoments zu verhindern, indem in jedem Zyklus unter Verwendung einer einzelnen vor dem Absenken am Rad erfassten Größe berechnet wird, auf welches Niveau das Bremsmoment abgesenkt werden soll. Damit kann bei dem nachfolgenden Erhöhen des Bremsmoments schneller wieder eine hohe Bremswirkung erreicht werden.

Es wird ein Verfahren zum Betreiben eines Fahrzeugs vorgeschlagen, bei dem ein Bremsmoment an zumindest einem Rad des Fahrzeugs zyklisch zumindest in Aufbauphasen und Reduktionsphasen angesteuert wird, um ein Blockieren des Rads zu verhindern, wobei in einer Aufbauphase das Bremsmoment erhöht wird, bis ein Haftungsmaximum an dem Rad überschritten wird und in einer anschließenden Reduktionsphase das Bremsmoment um eine Bremsmomentdifferenz gesenkt wird, die unter Verwendung eines nach der Aufbauphase erfassten Radbeschleunigungswerts des Rads und eines Zielbeschleunigungswerts für das Rad ermittelt wird.

Ideen zu Ausführungsformen der vorliegenden Erfindung können unter anderem als auf den nachfolgend beschriebenen Gedanken und Erkenntnissen beruhend angesehen werden.

Unter einem Bremsmoment kann ein einer Drehbewegung eines Rads entgegenwirkendes Drehmoment verstanden werden. Das Bremsmoment kann durch ein Bremssystem des Fahrzeugs erzeugt werden. Beispielsweise kann das Bremsmoment durch eine mit dem Rad gekoppelte hydraulische Bremse des Bremssystems erzeugt werden. Bei der hydraulischen Bremse kann ein eingestellter Bremsdruck proportional zu dem Bremsmoment sein. Ebenso kann das Bremsmoment durch ein Antriebssystem des Fahrzeugs erzeugt werden. Beispielsweise kann das Bremsmoment durch einen mit dem Rad gekoppelten Elektromotor des Antriebssystems erzeugt werden. Der Elektromotor kann gezielt angesteuert werden, um das Bremsmoment zu erzeugen.

Durch das Bremsmoment entsteht ein Schlupf zwischen einem Reifen des Rads und einem Untergrund unter dem Reifen. In einer Aufbauphase wird das Bremsmoment rampenartig erhöht. Damit erhöht sich auch der Schlupf. Beispielsweise wird das Bremsmoment linear ansteigend erhöht. Das Bremsmoment kann von einem Mindestmoment ausgehend erhöht werden. Ein Haftungsmaximum kann erreicht sein, wenn der Schlupf einen kritischen Wert erreicht. Beim Überschreiten des Haftungsmaximums kann der Schlupf überproportional oder exponentiell zunehmen beziehungsweise die Haftung überproportional oder exponentiell abnehmen. Am Haftungsmaximum kann eine maximale Bremskraft von dem Reifen auf den Untergrund übertragen werden. Wenn das Haftungsmaximum überschritten wird, kann das Rad zu blockieren beginnen, da das Bremsmoment nicht mehr vollständig auf den Untergrund übertragen werden kann.

Um das Blockieren zu beenden, kann das Rad wieder beschleunigt werden. Das Rad kann wieder beschleunigt werden, wenn das Bremsmoment kleiner ist, als das momentan vom Untergrund auf das Rad übertragbare Moment. In einer Reduktionsphase kann das Bremsmoment schnell verringert werden. Das Bremsmoment kann um eine Bremsmomentdifferenz auf ein niedrigeres Bremsmoment verringert werden. Beispielsweise kann bei der hydraulischen Bremse der Bremsdruck durch Öffnen eines Auslassventils verkleinert werden, bis das niedrigere Bremsmoment am Rad anliegt. Bei dem durch das Antriebssystem bereitgestellten Bremsmoment kann das verringerte Bremsmoment direkt angesteuert werden. Die Bremsmomentdifferenz kann auch näherungsweise so groß sein, wie das vorherige Bremsmoment. Dann kann das Bremsmoment soweit verringert werden, bis kein Moment mehr am Rad anliegt. Beispielsweise kann das Auslassventil vollständig geöffnet werden oder das Ansteuern des Bremsmoments unterbrochen werden. Die Bremsmomentdifferenz kann auch größer sein als das Bremsmoment. Dann kann das Bremsmoment durch ein entgegengesetzt zum Bremsmoment wirkendes Antriebsmoment aufgehoben beziehungsweise überkompensiert werden. Durch das Antriebsmoment kann das Rad aktiv beschleunigt werden.

Ein Radbeschleunigungswert kann eine momentane Drehbeschleunigung des Rads als Zahlenwert repräsentieren. Die Drehbeschleunigung kann aus einer Drehgeschwindigkeit des Rads abgeleitet werden. Die Drehgeschwindigkeit kann durch einen Sensor am Rad erfasst werden. Ein Zielbeschleunigungswert kann ein vordefinierter Zahlenwert sein. Der Zielbeschleunigungswert kann für das Fahrzeug vorkonfiguriert sein. Der Zielbeschleunigungswert kann als Applikationsparameter bezeichnet werden. Durch den hier vorgestellten Ansatz kann das Bremsmoment unter Verwendung des einen Applikationsparameters angesteuert werden. Die Bremsmomentdifferenz in der Reduktionsphase kann aus dem erfassten Radbeschleunigungswert und dem Zielbeschleunigungswert berechnet werden.

Als Radbeschleunigungswert kann ein Minimalwert eines nach der Aufbauphase erfassten Radbeschleunigungsverlaufs des Rads verwendet werden. Ein Radbeschleunigungsverlauf repräsentiert einen zeitlichen Verlauf der Beschleunigung des Rads. Der Radbeschleunigungsverlauf umfasst eine Vielzahl von Werten. Die Drehbeschleunigung kann aufgrund eines Trägheitsmoments des Rads und der mit dem Rad drehenden Teile auch nach Beenden der Aufbauphase abnehmen, bis das Rad wieder beschleunigt wird. Ein Minimalwert kennzeichnet einen Wendepunkt zwischen abnehmender Drehbeschleunigung und zunehmender Drehbeschleunigung. Durch eine Verwendung des Minimalwerts zum Berechnen der Bremsmomentdifferenz kann eine hohe Genauigkeit erreicht werden.

Der Radbeschleunigungswert kann alternativ einen Zeitschritt nach einem Ansteuerungszeitpunkt der Reduktionsphase erfasst werden. Es kann einen Zeitschritt dauern, bis die Maßnahme beziehungsweise Maßnahmen der Reduktionsphase Wirkung auf das Rad zeigen. Das Rad kann geringfügig zeitversetzt zu dem Ansteuerungszeitpunkt wieder beschleunigt werden. Bis dahin kann das Rad weiterhin langsamer werden. Ein Zeitschritt kann unter anderem durch eine Totzeit des Anti-Blockier-Systems vorgegeben sein.

Das Überschreiten des Haftungsmaximums kann erkannt werden, wenn ein Radbeschleunigungsgradient des Rads kleiner als ein Grenzgradient für das Rad ist. Ein Radbeschleunigungsgradient kann aus der Drehbeschleunigung des Rads abgeleitet werden. Der Radbeschleunigungsgradient kennzeichnet eine Steigung des Radbeschleunigungsverlaufs. Beim Bremsen des Rads kann der Radbeschleunigungsgradient negativ sein. Somit kann bei dem Überschreiten des Haftungsmaximums der negative Radbeschleunigungsgradient des Rads betragsmäßig größer sein als ein Betrag des ebenfalls negativen Grenzgradienten für dieses Rad. Der Radbeschleunigungsgradient kann einfach überwacht werden.

Das Bremsmoment kann in einer auf eine Reduktionsphase folgenden Plateauphase bis zur nächsten Aufbauphase konstant gehalten werden. Zumindest während der Plateauphase kann der Radbeschleunigungsverlauf erfasst werden. Ein Faktor für den Zielbeschleunigungswert zum Ermitteln der nächsten Bremsmomentdifferenz kann erhöht werden, wenn ein Maximum des Radbeschleunigungsverlaufs kleiner als der Zielbeschleunigungswert ist und damit die Radbeschleunigungsdifferenz nicht erreicht wird. Durch das Erhöhen des Faktors kann die Bremsmomentdifferenz in der nächsten Reduktionsphase größer werden, wodurch eine stärkere Bremsmomentreduktion erfolgt. Durch die stärkere Bremsmomentreduktion wird das Rad stärker beschleunigt. Umgekehrt kann der Faktor für den Zielbeschleunigungswert zum Ermitteln der nächsten Bremsmomentdifferenz gesenkt werden, wenn das Maximum des Radbeschleunigungsverlaufs um mehr als einen Toleranzbereich größer als der Zielbeschleunigungswert ist und damit die Radbeschleunigungsdifferenz übertroffen wird. Durch das Senken des Faktors wird die Bremsmomentdifferenz in der nächsten Reduktionsphase kleiner. Durch die kleinere Bremsmomentdifferenz resultiert eine schwächere Bremsmomentreduktion. Durch die schwächere Bremsmomentreduktion wird das Rad weniger stark beschleunigt. Der Faktor des Zielbeschleunigungswerts kann von Zyklus zu Zyklus geregelt werden.

Der Faktor für den Zielbeschleunigungswert zum Ermitteln der nächsten Bremsmomentdifferenz kann erhöht werden, wenn der Radbeschleunigungswert am Ende der Plateauphase um weniger als eine Radbeschleunigungsdifferenz größer als der Radbeschleunigungswert am Ende der vorhergehenden Aufbauphase ist. Durch das Erhöhen des Faktors kann die Bremsmomentdifferenz in der nächsten Reduktionsphase größer werden, wodurch eine stärkere Bremsmomentreduktion erfolgt. Durch die stärkere Bremsmomentreduktion wird das Rad stärker beschleunigt. Umgekehrt kann der Faktor des Zielbeschleunigungswerts zum Ermitteln der nächsten Bremsmomentdifferenz gesenkt werden, wenn der Radbeschleunigungswert am Ende der Plateauphase um mehr als eine Radbeschleunigungstoleranz größer als der Radbeschleunigungswert am Ende der vorhergehenden Aufbauphase ist. Durch das Senken des Faktors wird die Bremsmomentdifferenz in der nächsten Reduktionsphase kleiner. Durch die kleinere Bremsmomentdifferenz resultiert eine schwächere Bremsmomentreduktion. Durch die schwächere Bremsmomentreduktion wird das Rad weniger stark beschleunigt. Der Faktor des Zielbeschleunigungswerts kann von Zyklus zu Zyklus geregelt werden.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Anti-Blockier-System, das dazu ausgebildet ist, um die Schritte einer Variante des hier vorgestellten Verfahrens in entsprechenden Einrichtungen durchzuführen, anzusteuern bzw. umzusetzen.

Das Anti-Blockier-System kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Anti-Blockier-Systems und des Verfahrens im Rahmen des Schutzumfangs der Ansprüche modifiziert werden können, um zu weiteren Ausführungsformen der Erfindung zu gelangen.

Kurze Beschreibung der Zeichnungen

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

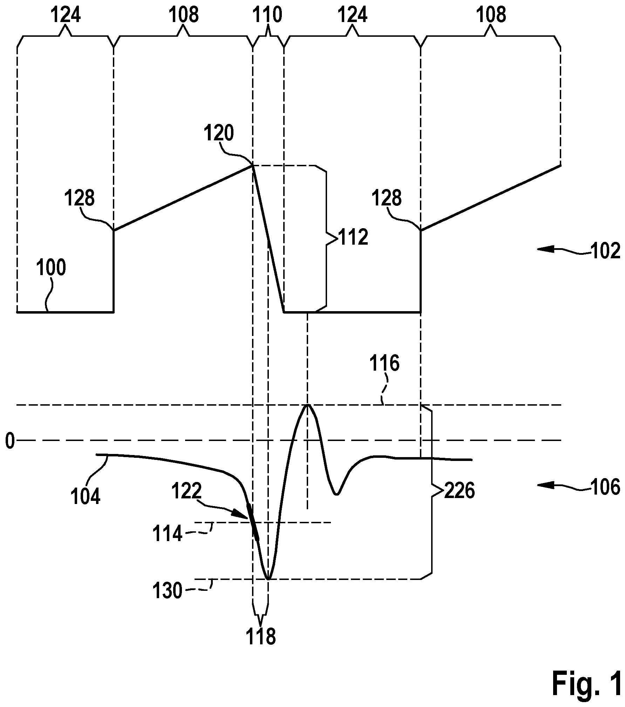

Fig. 1 zeigt eine Darstellung von Verläufen eines Bremsmoments und einer Radbeschleunigung gemäß einem Ausführungsbeispiel.

Die Figur ist lediglich schematisch und nicht maßstabsgetreu. Gleiche Bezugszeichen bezeichnen in der Figur gleiche oder gleichwirkende Merkmale.

Ausführungsformen der Erfindung

Fig. 1 zeigt einen Bremsmomentverlauf 100 eines Bremsmoments 102 an einem Rad eines Fahrzeugs und einen Radbeschleunigungsverlauf 104 einer Radbeschleunigung 106 des Rads. Der Bremsmomentverlauf 100 und der Radbeschleunigungsverlauf 104 sind während eines regelnden Eingriffs eines Anti-Blockier-Systems gemäß einem Ausführungsbeispiel zum Verhindern eines Blockierens des Rads dargestellt. Das Bremsmoment 102 wird zyklisch in Aufbauphasen 108 erhöht und in Reduktionsphasen 110 abgesenkt. Dabei wird das Bremsmoment 102 in den Aufbauphasen 108 so weit erhöht, bis das Rad ein Haftungsmaximum überschreitet und zu blockieren beginnt. In den Reduktionsphasen 110 wird das Bremsmoment 102 jeweils um eine Bremsmomentdifferenz 112 gesenkt, damit das Rad durch eine verbleibende Haftung zum Untergrund wieder beschleunigt wird.

Die anzusteuernde Bremsmomentdifferenz 112 wird unter Verwendung eines nach der jeweiligen Aufbauphase 108 erfassten Radbeschleunigungswerts 114 für jede anschließende Reduktionsphase 110 berechnet. Dazu wird die Radbeschleunigung 106 nach der Aufbauphase 108 gemessen und in dem Radbeschleunigungswert 114 abgebildet. Der Radbeschleunigungswert 114 und ein fahrzeugspezifischer Zielbeschleunigungswert 116 werden mit anderen festen Fahrzeugparametern in eine Verarbeitungsvorschrift eingesetzt und die Bremsmomentdifferenz 112 berechnet. Der Zielbeschleunigungswert 116 repräsentiert dabei eine gewünschte Wiederbeschleunigung des Rads nach dem beginnenden Blockieren.

In einem Ausführungsbeispiel wird der Radbeschleunigungsverlauf 104 nach dem Ende der Aufbauphase 108 überwacht. Aufgrund einer Trägheit des Rads reagiert die Radbeschleunigung 106 verzögert auf die Reduktion des Bremsmoments 102. Als der Radbeschleunigungswert wird dabei ein minimaler Radbeschleunigungswert 130 des Radbeschleunigungsverlaufs 104 verwendet.

Da die Trägheit des Rads bekannt ist, kann der Radbeschleunigungswert 114 alternativ um einen Zeitschritt 118 nach einem Ansteuerungszeitpunkt 120 der Reduktionsphase 110 erfasst werden. Die Reduktionsphase 110 kann beispielsweise angesteuert werden, wenn ein Beschleunigungsgradient 122 der Radbeschleunigung 106 kleiner als ein Grenzgradient ist.

In einem Ausführungsbeispiel wird das Bremsmoment 102 nach der Reduktionsphase 110 für eine Plateauphase 124 konstant gehalten, bis die nächste Aufbauphase 108 beginnt. In der Plateauphase 122 stabilisiert sich das Rad. In der Plateauphase 124 wird überwacht, ob die Radbeschleunigung 106 stark genug ansteigt, um den Zielbeschleunigungswert 116 zu erreichen. Wenn der Zielbeschleunigungswert 116 nicht erreicht oder überschritten wird, wird in einem Ausführungsbeispiel ein Faktor in der Verarbeitungsvorschrift zum Berechnen der Bremsmomentdifferenz 112 angepasst. Falls der Zielbeschleunigungswert 116 nicht erreicht wird, also das Rad nicht stark genug beschleunigt wird, wird der Faktor so angepasst, dass für die nächste Reduktionsphase 110 bei gleich erfassten Radbeschleunigungswert 114 eine größere Bremsmomentdifferenz 112 berechnet wird. Umgekehrt wird der Faktor bei einem Überschreiten des Zielbeschleunigungswerts 116 um mehr als eine Toleranz so angepasst, dass für die nächste Reduktionsphase 110 bei gleich erfasstem Radbeschleunigungswert 114 eine kleinere Bremsmomentdifferenz 112 berechnet wird.

In einem Ausführungsbeispiel wird der Radbeschleunigungswert 114 am Ende der Aufbauphase 108 und einen Zeitschritt 118 später mit dem erreichten Radbeschleunigungswert 130 verglichen. Wenn die Differenz aus dem Radbeschleunigungswert 114 und dem Radbeschleunigungswert 130 in der Plateauphase 124 die Radbeschleunigungsdifferenz 126 übersteigt oder nicht erreicht kann mit einem Faktor die berechnete Bremsmomentdifferenz 112 zusätzlich korrigiert werden.

In einem Ausführungsbeispiel wird das Bremsmoment 102 am Ende der Plateauphase 124 zu Beginn der nächsten Aufbauphase 108 sehr schnell auf einen Anfangswert 128 erhöht. Der Anfangswert 128 ist so gewählt, dass das Rad sicher noch nicht blockiert, jedoch bereits eine Bremswirkung zu erwarten ist. Dadurch kann eine Dauer der Aufbauphase 108 verkürzt werden beziehungsweise das Bremsmoment 102 mit einer geringeren Steigung erhöht werden.

Mit anderen Worten wird ein Algorithmus zur Bremskraftoptimierung mittels eines Instabilitätsreglers vorgestellt.

Ein heutiger ABS Regler basiert auf einem Instabilitätsregelprinzip mit zyklisch ablaufenden Druckaufbau-, Druckhalte- und Druckabbauphasen. Dabei wird solange Druck im Rad aufgebaut, bis das Maximum der Reifenkennlinie beziehungsweise $\mu$-Schlupf-Kennlinie überschritten ist und das Rad instabil wird.

Damit wird sichergestellt, dass der Regler robust auf Änderungen des Straßenreibwerts reagiert und somit die Änderungen der maximal übertragbaren Bremskraft erkennt. Danach wird das Rad mit einem gezielten Druckabbau stabilisiert, bevor mit dem nächsten Druckaufbau begonnen werden kann. Der Druckabbau soll auf allen denkbaren Reibwerten robust funktionieren und somit sicherstellen, dass das Rad nicht zum Blockieren kommt.

Aktuell wird die Druckabbaugröße auf das entsprechende Fahrzeug aufwändig appliziert. Dabei ist die Herausforderung, den Druckabbau so zu applizieren, dass dieser sowohl in der Einschwingphase mit starker Normalkraftänderung, bei kleinen Fahrzeuggeschwindigkeiten mit starker Schlupfdynamik, bei Störungen mit kurzzeitigen Reibwertänderungen und im eingeschwungenen Zustand sicher funktioniert und die Radstabilisierung sicherstellt. Dies wird ermöglicht, indem eine applizierte Grund-Abbaugröße über zusätzliche Applikationsparameter und eine Situationserkennung gezielt korrigiert wird.

Der hier vorgestellte modellbasierte Druckabbau ist adaptiv, da er sich den oben beschriebenen Situationen selbstständig anpasst. Er kann sich ausschließlich über die Eingangsgrößen vergrößern oder verkleinern. Daher benötigt der neue Druckabbau keine umfangreiche Applikation der beschriebenen Situationen und verfügt somit über deutlich weniger Applikationsparameter.

Wenn das Rad mit einem beliebigen Druckaufbaugradienten über das Maximum der Kraftschlusskennlinie geführt wurde, wird der Druck bei dem hier vorgestellten Ansatz so schnell wie möglich wieder auf ein Niveau abgesenkt, bei dem das Rad sich wieder stabilisiert. Nachdem die Raddynamik deutlich größer ist als die Fahrzeugdynamik, kann dabei vereinfacht die Annahme getroffen werden, dass während des Druckabbaus im Wesentlichen keine Normalkraftveränderung stattfindet. Des Weiteren wird die Vereinfachung getroffen, dass sich nach dem Druckabbau und somit auf dem Druckniveau, das zur Radstabilisierung erforderlich ist, derselbe Kraftschluss ($\mu 2$) einstellt, der vor dem Druckabbau ($\mu 1$) erreicht wurde.

Zur Verdeutlichung ist in (1) die Momentenbilanz zu Druckabbau-Beginn abgebildet.

$$F_{x1} = 1/R_{Rad} * (J_{Rad} * a_{x1}/R_{Rad} + Cp * p_{x1}) \quad (1)$$

Wobei $F_{x1}$ die Bremskraft zu Druckabbau-Beginn ist,

$R_{Rad}$ der Rollradius des Rads ist,

$J_{Rad}$ das Massenträgheitsmoment des Rads ist,
$a_{x1}$ die Beschleunigung zu Druckabbau-Beginn ist,
Cp der Bremsenkoeffizient (=Radradius der Bremsscheibe * Fläche des Bremskolbens * Kraftschlussbeiwert) ist und
$p_{x1}$ der Bremsdruck zu Druckabbau-Beginn ist.

In (2) ist die Momentenbilanz zu Druckabbau-Ende abgebildet.

$$F_{x2} = 1/R_{Rad} * (J_{Rad} * a_{x2}/R_{Rad} + Cp * p_{x2}) \ (2)$$

Wobei $F_{x2}$ die Bremskraft zu Druckabbau-Ende ist,

$a_{x2}$ die Beschleunigung zu Druckabbau-Ende ist und
$p_{x1}$ der Bremsdruck zu Druckabbau-Ende ist.

Die Bremskraft $F_x$ bleibt mit den gerade getroffenen Annahmen $\mu$ = konst. und $F_N$ = konst. konstant, woraus folgt

$$F_{x1} = F_{x2} \ (3)$$

Werden (1) und (2) in (3) eingesetzt und damit eine Differenz nach dem Druck gebildet, so resultiert in (4) die notwendige Druckabbaustufe.

$$\Delta p \ Abbau = J_{Rad}/(R_{Rad} * Cp) * (a_{x2} - a_{x1}) * K \ (4)$$

Dabei sind $J_{Rad}$, $R_{Rad}$ und Cp Fahrzeugparameter und die Zielradbeschleunigung $a_{Soll} = a_{x2}$ der einzige Applikationsparameter. K ist ein Korrekturfaktor, der abhängig von dem Erreichen der Zielradbeschleunigung erhöht oder verringert werden kann.

In Fig. 1 ist ein Regelzyklus eines Instabilitätsreglers gemäß dem hier vorgestellten Ansatz dargestellt. Im oberen Diagrammteil ist der Raddruckverlauf, im unteren Diagramm der dazugehörige aRad-Verlauf abgebildet.

Im eingeschwungenen Zustand der ABS-Regelung erreicht die Radwiederbeschleunigung während der der Radstabilisierung nach dem Druckabbau in jedem Regelzyklus die Ziel-Radbeschleunigung. Die Druckabbaugröße wird mit größer werdender Radverzögerung vergrößert und mit kleiner werdender Radverzögerung reduziert. Bei Störungen und Reibwertänderungen passt sich die Druckabbaustufe automatisch an. Es gibt weniger Folgedruckabbauten. Folgeabbauten haben keine einheitliche Druckstufengröße.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Anti-Blockier-Systems eines Fahrzeugs, bei dem ein Bremsmoment (102) an zumindest einem Rad des Fahrzeugs zyklisch zumindest in Aufbauphasen (108) und Reduktionsphasen (110) angesteuert wird, um ein Blockieren des Rads zu verhindern, wobei in einer Aufbauphase (108) das Bremsmoment (102) erhöht wird, bis ein Haftungsmaximum an dem Rad überschritten wird, **dadurch gekennzeichnet dass** in einer anschließenden Reduktionsphase (110) das Bremsmoment (102) um eine Bremsmomentdifferenz (112) gesenkt wird, die unter Verwendung eines nach der Aufbauphase (108) erfassten Radbeschleunigungswerts (114) des Rads und eines Zielbeschleunigungswerts (116) für das Rad ermittelt wird.

2. Verfahren gemäß Anspruch 1, bei dem als Radbeschleunigungswert (114) ein Minimalwert eines nach der Aufbauphase (108) erfassten Radbeschleunigungsverlaufs (104) des Rads verwendet wird.

3. Verfahren gemäß Anspruch 1, bei dem der Radbeschleunigungswert (114) einen Zeitschritt (118) nach einem Ansteuerungszeitpunkt (120) der Reduktionsphase (110) erfasst wird.

**4.** Verfahren gemäß einem der vorhergehenden Ansprüche, bei dem das Überschreiten des Haftungsmaximums erkannt wird, wenn ein Radbeschleunigungsgradient (122) des Rads kleiner als ein Grenzgradient für das Rad ist.

**5.** Verfahren gemäß einem der vorhergehenden Ansprüche, bei dem das Bremsmoment (102) in einer auf eine Reduktionsphase (110) folgenden Plateauphase (124) bis zur nächsten Aufbauphase (108) konstant gehalten wird und zumindest während der Plateauphase (124) ein Radbeschleunigungsverlauf (104) des Rads erfasst wird, wobei ein Faktor für das Ermitteln der nächsten Bremsmomentdifferenz (112) erhöht wird, wenn ein Maximum des Radbeschleunigungsverlaufs (104) kleiner als der Zielbeschleunigungswert (116) ist.

**6.** Verfahren gemäß einem der vorhergehenden Ansprüche, bei dem das Bremsmoment (102) in einer auf eine Reduktionsphase (110) folgenden Plateauphase (124) bis zur nächsten Aufbauphase (108) konstant gehalten wird und während der Plateauphase (124) ein Radbeschleunigungsverlauf (104) des Rads erfasst wird, wobei ein Faktor für das Ermitteln der nächsten Bremsmomentdifferenz (112) gesenkt wird, wenn ein Maximum des Radbeschleunigungsverlaufs (104) um mehr als ein Toleranzbereich größer als der Zielbeschleunigungswert (116) ist.

**7.** Anti-Blockier-System, das dazu ausgebildet ist, das Verfahren gemäß einem der vorhergehenden Ansprüche in entsprechenden Einrichtungen auszuführen, umzusetzen und/oder anzusteuern.

**8.** Computerprogrammprodukt, das dazu eingerichtet ist, das Verfahren gemäß einem der Ansprüche 1 bis 6 auszuführen, umzusetzen und/oder anzusteuern.

**9.** Maschinenlesbares Speichermedium, auf dem das Computerprogrammprodukt gemäß Anspruch 8 gespeichert ist.

**Claims**

**1.** Method for operating an anti-lock braking system of a vehicle, in which method a braking torque (102) on at least one wheel of the vehicle is controlled cyclically at least in build-up phases (108) and reduction phases (110) in order to prevent locking of the wheel, wherein the braking torque (102) is increased in a build-up phase (108) until a maximum adhesion at the wheel is exceeded, **characterized in that** the braking torque (102) is reduced in a subsequent reduction phase (110) by a braking torque difference (112), which is determined using a wheel acceleration value (114) for the wheel recorded after the build-up phase (108) and a target acceleration value (116) for the wheel.

**2.** Method according to Claim 1, in which a minimum value for a wheel acceleration profile (104) of the wheel recorded after the build-up phase (108) is used as the wheel acceleration value (114).

**3.** Method according to Claim 1, in which the wheel acceleration value (114) is recorded one time step (118) after a control time (120) of the reduction phase (110).

**4.** Method according to any of the preceding claims, in which exceeding of the maximum adhesion is identified when a wheel acceleration gradient (122) of the wheel is smaller than a limit gradient for the wheel.

**5.** Method according to any of the preceding claims, in which the braking torque (102) is kept constant in a plateau phase (124), which follows a reduction phase (110), until the next build-up phase (108) and a wheel acceleration profile (104) of the wheel is recorded at least during the plateau phase (124), wherein a factor for determining the next braking torque difference (112) is increased when a maximum of the wheel acceleration profile (104) is smaller than the target acceleration value (116).

**6.** Method according to any of the preceding claims, in which the braking torque (102) is kept constant in a plateau phase (124), which follows a reduction phase (110), until the next build-up phase (108) and a wheel acceleration profile (104) of the wheel is recorded at least during the plateau phase (124), wherein a factor for determining the next braking torque difference (112) is reduced when a maximum of the wheel acceleration profile (104) is greater than the target acceleration value (116) by more than one tolerance band.

**7.** Anti-lock braking system which is designed to execute, implement and/or control the method according to any of the preceding claims in corresponding devices.

8. Computer program product which is designed to execute, implement and/or control the method according to any of Claims 1 to 6.

9. Machine-readable storage medium on which the computer program product according to Claim 8 is stored.

**Revendications**

1. Procédé permettant de faire fonctionner un système antiblocage d'un véhicule, dans lequel un couple de freinage (102) au niveau d'au moins une roue du véhicule est piloté de façon cyclique au moins pendant des phases d'accroissement (108) et des phases de réduction (110) afin d'empêcher un blocage de la roue, dans lequel, dans une phase d'accroissement (108), le couple de freinage (102) est augmenté jusqu'à ce qu'il dépasse un maximum d'adhérence au niveau de la roue, **caractérisé en ce que** dans une phase de réduction consécutive (110), le couple de freinage (102) est diminué d'une différence de couple de freinage (112) qui est établie en utilisant une valeur d'accélération de roue (114) de la roue, détectée après la phase d'accroissement (108), et une valeur d'accélération cible (116) pour la roue.

2. Procédé selon la revendication 1, dans lequel une valeur minimale d'une courbe d'accélération de roue (104) de la roue, détectée après la phase d'accroissement (108), est utilisée en tant que valeur d'accélération de roue (114).

3. Procédé selon la revendication 1, dans lequel la valeur d'accélération de roue (114) est détectée à un incrément de temps (118) après un instant de pilotage (120) de la phase de réduction (110).

4. Procédé selon l'une quelconque des revendications précédentes, dans lequel le dépassement du maximum d'adhérence est identifié lorsqu'un gradient d'accélération de roue (122) de la roue est inférieur à un gradient limite pour la roue.

5. Procédé selon l'une quelconque des revendications précédentes, dans lequel le couple de freinage (102) est maintenu constant dans une phase plateau (124) suivant une phase de réduction (110) jusqu'à la phase d'accroissement suivante (108), et une courbe d'accélération de roue (104) de la roue est détectée au moins pendant la phase plateau (124), dans lequel un facteur pour établir la différence de couple de freinage suivante (112) est augmenté si un maximum de la courbe d'accélération de roue (104) est inférieur à la valeur d'accélération cible (116).

6. Procédé selon l'une quelconque des revendications précédentes, dans lequel le couple de freinage (102) est maintenu constant dans une phase plateau (124) suivant une phase de réduction (110) jusqu'à la phase d'accroissement suivante (108), et une courbe d'accélération de roue (104) de la roue est détectée pendant la phase plateau (124), dans lequel un facteur pour établir la différence de couple de freinage suivante (112) est diminué si un maximum de la courbe d'accélération de roue (104) est supérieur à la valeur d'accélération cible (116) de plus d'une plage de tolérance.

7. Système antiblocage, réalisé pour exécuter, mettre en œuvre et/ou piloter le procédé selon l'une quelconque des revendications précédentes dans des dispositifs correspondants.

8. Produit de programme informatique, qui est conçu pour exécuter, mettre en œuvre et/ou piloter le procédé selon l'une quelconque des revendications 1 à 6.

9. Support de stockage lisible par machine sur lequel est enregistré le produit de programme informatique selon la revendication 8.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0291978 A2